# EUROPEAN PATENT APPLICATION

(11) **EP 2 205 013 A1**
(43) Date of publication of application: **07.07.2010**
(21) Application number: 09153658.1
(22) Date of filing: 25.02.2009
(51) Int. Cl.: H04W 8/08

(54) **Method and System enabling seamless connectivity in WLAN based HotSpots**

(30) Priority: 30.12.2008 EP 08173093
(71) Applicant: Deutsche Telekom AG, 53113 Bonn (DE); Fachhochschule Giessen-Friedberg, 35390 Giessen (DE)
(72) Inventor: Bayer, Nico, 53113, Bonn (DE); Einsiedler, Hans Joachim, 53113, Bonn (DE); Sivchenko, Dimitri, 35390, Giessen (DE); Xu, Bangnan, 64295, Darmstadt (DE)
(74) Representative: Kewitz, Ansgar

(57) **Abstract**

A method that enables seamless roaming of a HotSpot Mobile Node (HSMN) between WLAN based HotSpots that are connected via HotSpot Area Router (HSAR), wherein a HotSpot Mobility Management Entity (HSMME) is used to control the routing of the HSAR and the IP-address-assignment to the HSMN, comprising the steps:
a. maintaining by the HSMME a table of all associated HSMNs within the HSAR in terms of IP address and MAC address;
b. when a HSMN changes the HotSpot, the HSMN keeps its already assigned valid IP address based on the MAC even if it is topologically incorrect and the delivery of the packets to the topologically incorrect IP addresses is enabled, by
c. reconfigurating of a route by the HSMME in the HSAR to forward IP packets with topologically incorrect IP address to a HSMN after a handover of a HSMN.

## Description

### Field of the Invention

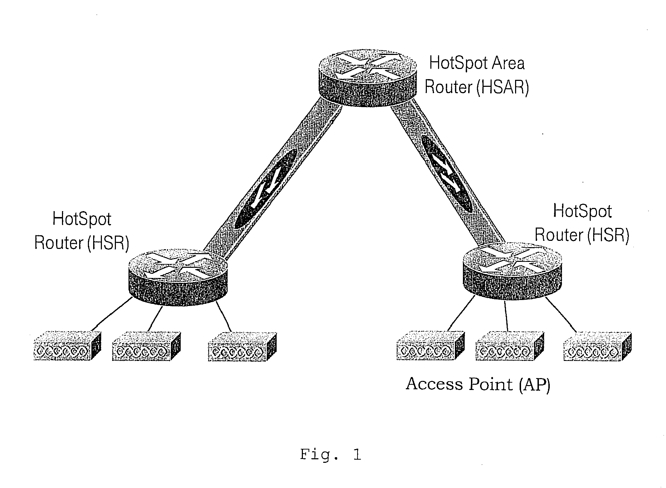

WLAN (Wireless Local Area Network) based HotSpots are increasingly important to be used as broadband wireless access in telecommunication industries. A typical WLAN based HotSpot architecture is shown in Fig 1. One WLAN HotSpot consists of several WLAN Access Points (APs) which are connected to a HotSpot Router (HSR). Many HSRs are connected to a HotSpot Area Router (HSAR) that connects alls HSRs to the Internet. A HotSpot Mobile Node (HSMN) can move between the APs which are connected to the same or different HSRs. Mobility of the HSMN between APs connected to the same HSR is supported in today's WLAN HotSpots. But there is a critical problem which occurs if the HSMN leaves the coverage of one HotSpot controlled by a HSR and enters another HotSpot by connecting to an AP connected to another HSR. A typical HSR serves as a DHCP (Dynamic Host Configuration Protocol) server for HSMN connected to the HotSpot.

DHCP is a way to manage network parameter assignment from a single DHCP server, or a group of DHCP servers arranged in a fault-tolerant manner. Even in small networks, Dynamic Host Configuration Protocol is useful because it can make it easy to add new machines to the local network.

DHCP is also recommended even in the case of servers whose addresses rarely change, so that if a server needs to be readdressed (RFC 2071), changes can be made in as few places as possible.

DHCP can be used to assign IP addresses directly to servers and desktop machines, and through a Point-to-Point Protocol (PPP) proxy, to dialup and broadband on-demand hosts, as well as for residential Network Address Translation (NAT) gateways.

Upon connection to a new HSR, the HSMN gets a new IP address in the new HotSpot configured by the new HSR. If the HSMN performs a handover between two HotSpots, its active IP connections will be interrupted due to the change of the IP address of the HSMN. Much worse is that the HSMN has to wait a long time before it is allowed to access the network and the Internet respectively again. Therewith the HSMN cannot establish new IP connections in the new HotSpot during a timeout. The authentication of the HSMN to access the Internet is done in the HSAR. Using its credentials like a user name and a password the HSMN will be allowed to get access to the Internet with the allocated IP address. In the case the HSMN is inactive for a specific time (e.g. the HSMN just switched off its wireless interface) the access to the Internet for this IP address will be blocked for a specific time. Due to the security reason a pre-defined time interval must be waited before the HSMN may be authenticated again with another IP address as the HSAR has the wrong information that this HSMN is still authenticated with another HSR. This is an actual problem needed to be solved for WLAN based HotSpots.

### Summary of Invention

The disclosed invention enables a HSMN to move between the HotSpots (e.g. between APs connected to different HSRs) without any interruption of the connection as long as HSRs are connected to the same HSAR.

The problem is solved by the features of the independent claims:
In the case that a HSMN roams from one HotSpot, say an old HotSpot to another HotSpot, say a new HotSpot, the HSMN needs to keep its IP address unmodified to avoid any interruption of any active IP connection. In a conventional HotSpot, however, a HSMN gets a new IP address if it enters a new HotSpot and therefore, IP connections will be interrupted due to the change of the IP address. To solve this problem a system was invented for a HSMN to keep its IP address in the new HotSpot.
   The invented system may be realised by a Local Mobility Controller (LMC) and a HotSpot Mobility Management Entity (HSMME). An LMC may be connected to an HSR via a communication link like an Ethernet interface. LMC functions may also be implemented as a software module directly in a HSR. In the same way, a HSMME may be connected to an HSAR via a communication link like an Ethernet interface or be implemented in an HSAR also directly as a software module.

The detection of the mobility, i.e. the movement between two HotSpots, of a HSMN may be realised by maintaining a table of associated HSMNs with APs connected to the same HSR. An LMC may maintain a table of the associated HSMNs within the HSR to which this LMC is connected. An HSMME maintains a table of associated HSMNs in each HSR connected to the same HSAR.

In the case a new HSMN is associated with a new AP this AP may generate a message to the corresponding LMC. An LMC can also get the association information by polling the APs periodically. The hardware address of the accessing interface of the HSMN, MAC address, can be used as association information by the LMC. As soon as an LMC gets the information about a newly associated HSMN, it sends a message to HSMME informing it about a new HSMN associated with the corresponding HSR. The HSMME checks the table of the associated HSMNs to see if the HSMN is/was associated with another HSR connected to this HSAR and whether the IP address assigned to this HSMN is still valid. If the MN was associated with another HSR, the HSMME has detected the mobility of the HSMN which has moved from the old HotSpot (old HSR) with which the HSMN has been associated before. Thus, the information about the HSMN mobility is available in the HSMME. The new HotSpot (new HSR) informs the HSMME in the message generated by the LMC of the new HotSpot.

After the detection of a movement of a HSMN which moves from an old HotSpot to a new HotSpot and has already a valid IP address, the HSMME reconfigures the routing table of the HSAR to route the IP packets destined to the IP of the HSMN to the new HotSpot (to the new HSR). For example, IP-in-IP tunnelling or VPN tunnelling between the HSAR and the new HSR can be used for that. Standard hierarchical routing and sub-netting mechanisms ensure that the IP packet can be delivered by the HSR over the AP to the HSMN. In the uplink default routing entries are used to send packets from the HSMN over the HotSpot architecture to the Internet. The HSMME also needs to ensure that the same IP address as in the old HotSpot will be assigned to the HSMN.

The advantages of the invention are:
1. A user keeps its IP address in the new HotSpot, so the IP connection and IP data service will not be interrupted as the HSMN IP address is already authenticated to access the Internet.
2. Unlike the Mobile IP solution there is no software or hardware client necessary to be installed in the user device.
3. No changes are necessary in the existing HotSpots hardware.

### Brief Description of Drawings

Fig. 1 presents a WLAN based HotSpot architecture, known from the state of the art.
Fig. 2 shows a WLAN based HotSpot architecture supporting seamless roaming of HSMNs between different HotSpots.

### Detailed Description of Preferred Embodiments.

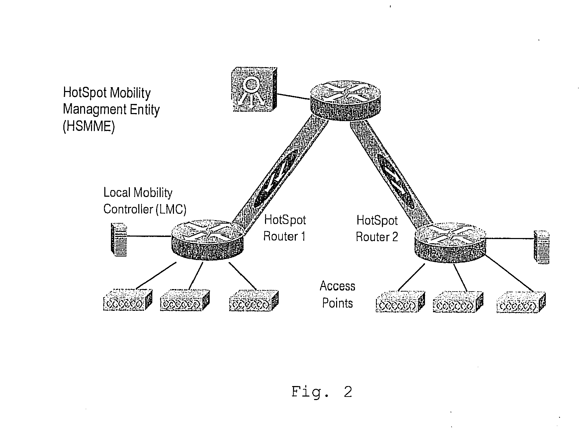

The invented system may be realised as shown in Fig. 2. The system consists of a Local Mobility Controller (LMC) and a HotSpot Mobility Management Entity (HSMME) which may be added to a WLAN based HotSpot architecture. These components can be integrated as software modules in the existing components, such as HSR and HSAR or can be stand alone appliances.

A LMC connected to a HSR maintains a table of all HSMNs associated with any of the APs connected to this HSR. A LMC may provide DHCP-relay function and observe association and de-association of HSMNs within the area of the HSR. The DHCP server functionality can be realized in the HSMME or in the LMC. The LMC observes association lists of the different APs that are connected to the HSR. In the case a new HSMN is associated/de-associated with an AP connected to the corresponding HSR, the LMC informs its HSMME about that event via an association-info-message. The main information that must be contained in this message is the identifier of the HSMN (typically, the hardware/MAC address of the wireless interface used by the HSMN to connect to APs) and the identifier of the HotSpot, that can be for example the IP address of the LMC. It can also be extracted from the IP source address of the message received by the HSMME. The HSMME maintains the database of all HSRs connected to the HSAR. In the database the IPs of LMCs may be stored so that the HSMME can uniquely identify both the HSMN and the HotSpot whereto the HSMN is currently connected. This information is maintained in HSMME to detect any inter HotSpot mobility of a HSMN.

A HotSpot Mobility Management Entity (HSMME) may be connected to a HSAR. The HSMME may be implemented with a central DHCP server that keeps track of all HSMNs as well as the assigned IP addresses. A DHCP relay function is implemented in LMCs instead. The DHCP relay function relays DHCP messages between the central DHCP server and the HSMNs.

The HSMME ensures, that
- In the case a HSMN has not yet configured an IP address, but requests an address using the DHCP protocol after connecting to a HotSpot, the HSMME assigns a topologically correct IP address to the HSMN. Topologically correct means, the packets destined to that address are delivered to the HotSpot by using usual IP routing mechanisms without the need for a routing table manipulation.
- In the case the HSMN already has a valid IP address and sends DHCP requests to HSMME for an IP address, the HSMME assigns to this HSMN the old IP address even if this address is topologically incorrect. Topologically incorrect means, the packets destined to the IP would not be routed to the old, topologically correct HotSpot wherefrom the HSMN has moved, but to the new HotSpot using specific routing entries.
- To handle packet delivery to topologically incorrect IP addresses, e.g. if a HSMN has performed an inter HotSpot handover, the HSMME has to reconfigure a routing entry in the HSAR so that the packets destined to the IP address of the HSMN will be delivered to the new location (new HotSpot or new HSR) of the HSMN. The HSMME creates for that, or configures a tunnel so that the packets destined to the IP address of the HSMN will be tunnelled to the new HSR of the HSMN. Other routing techniques can also be used.

## Claims

1. A method that enables seamless roaming of a HotSpot Mobile Node (HSMN) between WLAN based HotSpots, that are connected via a HotSpot Area Router (HSAR), wherein a HotSpot Mobility Management Entity (HSMME) is used to control the routing of the HotSpot Area Router (HSAR) and the IP-address-assignment to the HSMN, comprising the steps:
a. maintaining by the HSMME a table of all associated HSMNs within the HSAR in terms of IP address and MAC address;
b. when a HSMN changes the HotSpot, the HSMN keeps its already assigned valid IP address based on the MAC even if it is topologically incorrect and the delivery of the packets to the topologically incorrect IP addresses is enabled, by
c. reconfigurating of a route by the HSMME in the HSAR to forward IP packets with topologically incorrect IP address to a HSMN after a handover of a HSMN.

2. The method according to the previous claim, wherein the mechanism to quickly detect mobility of a HSMN comprises maintaining a table of associated HSMNs and exchanging association info messages between a Local Mobility Controller (LMC) and the HSMME.

3. The method according to one or more of the previous claims, wherein in the case a new HSMN is associated or disassociated with an Access Point (AP), the AP may generate a message to the corresponding LMC
and/or
an LMC can also get the association information by polling the APs periodically to find changes in the HSMN connected to the APs.

4. The method according to one or more of the previous claims, wherein the access to a previously assigned IP address to a new HSMN will be blocked for a defined timeout, so that the IP address will be available for an old HSMN after exchanging the HotSpot.

5. The method according to one or more of the previous claims, wherein after the detection of a movement of a HSMN which moves from an old HotSpot to a new HotSpot and has already a valid IP address, the HSMME reconfigures the routing table of the HSAR to route the IP packets destined to the IP of the HSMN to the new HotSpot.

6. The method according to the previous claims, wherein the routes can be configured by creating or using Paket-Tunnels between the components.

7. The method according to the previous claims, wherein IP-in-IP tunnelling or VPN tunnelling between the HSAR and the HSR is used.

8. The method according to one or more of the previous claims, wherein when the HSMN already has a valid IP address and sends DHCP requests to HSMME for an IP address, the HSMME assigns to the HSMN the old IP address even if the address is topologically incorrect, and performs a configuration of the HSAR.

9. A system that enables seamless roaming of a HotSpot Mobile Node (HSMN) between WLAN based Hotspots, that are connected via HotSpot Area Router (HSAR), comprising a HotSpot Mobility Management Entity (HSMME), which is used to control the routing of the HotSpot Area Router (HSAR) and the IP-address-assignment to the HSMN,
wherein the HSMME comprises a memory to maintain a table of all associated HSMNs within the HSAR in terms of IP address and MAC address,
means to re-assign an IP-address based on the MAC address when a HSMN changes the HotSpot, so that the HSMN keeps its already assigned valid IP address even if it is topologically incorrect and the delivery of the packets to the topologically incorrect IP addresses is enabled,
means reconfiguration of a route by the HSMME in the HSAR to forward IP packets with topologically incorrect IP address after a handover of a HSMN.

10. The system according to the previous system claim, comprising a Local Mobility Controller (LMC) to quickly detect mobility of a HSMN comprising a memory to maintain a table of associated HSMNs and exchanging association information messages with HSMME.

11. The system according to one or more of the previous system claim, wherein in the case a new HSMN is associated or disassociated with an AP (Access Point), the AP comprises means to generate a message to the corresponding LMC
and/or
an LMC comprises means to get the association information by polling the APs periodically to find changes in the HSMN connected to the APs.

12. The system according to one or more of the previous system claims, comprising a timer so that the access to a previously assigned IP address to a new HSMN will be blocked for a defined timeout, so that the IP address will be available for an old HSMN after exchanging the HotSpot.

13. The system according to one or more of the previous system claims, wherein after the detection of a movement of a HSMN which moves from an old HotSpot to a new HotSpot and has already a valid IP address, the HSMME comprises means to reconfigure the routing table of the HSAR to route the IP packets destined to the IP of the HSMN to the new HotSpot.

14. The system according to the previous system claim,
wherein the routes are configured by creating or using Packet-Tunnels between the components, in particular IP-in-IP tunnelling or VPN tunnelling between the HSAR and the HSR.

15. The system according to one or more of the previous system claims, wherein when the HSMN already has a valid IP address and sends DHCP requests to HSMME for an IP address, the HSMME has to re-assign to the HSMN the old IP address based on the MAC even if the address is topologically incorrect, and performs a configuration of the router.
